# FASCICULE DE BREVET EUROPEEN

(11) **EP 1 188 645 B1**
(45) Date de publication et mention de la délivrance du brevet: **08.03.2006**
(21) Numéro de dépôt: 01402339.4
(22) Date de dépôt: 11.09.2001
(51) Int. Cl.: B62D 25/08, B60K 11/04

(54) **Ensemble pour véhicule comprenant une cassette de refroidissement et un cadre de support**
Kraftfahrzeugvorbau mit Kühler und Kühlerbefestigungstruktur
Vehicle front end with radiator and supporting frame

(30) Priorité: 13.09.2000 FR 0011674
(43) Date de publication de la demande: 20.03.2002
(73) Titulaire: PEGUFORM FRANCE, 27950 Saint Marcel (FR)
(72) Inventeur: Brogly, Sébastien, 27950 St Just (FR); George, Ghislain, 27200 Vernon (FR); Renault, Thierry, 27200 Vernon (FR)
(74) Mandataire: Le Forestier, Eric

(56) Documents cités:
- EP-A- 0 908 374
- EP-A- 0 994 006
- DE-A- 10 008 638
- DE-A- 10 042 037
- DE-A- 19 827 451

## Description

L'invention concerne les ensembles pour véhicules automobiles comprenant une cassette de refroidissement et un cadre de support de cette cassette.

On connaît des ensembles pour véhicules automobiles selon le préambule de la revendication 1 (voir EP-A-0 908 374), comprenant une cassette de refroidissement portant le groupe motoventilateur et un cadre supportant la cassette. Un tel ensemble constitue ce que l'on appelle généralement la façade avant technique du véhicule. Actuellement, la cassette est généralement fixée au cadre au moyen de fixations positives telles que des vis. Toutefois, un tel ensemble présente des inconvénients. En effet, lorsque le véhicule subit un choc frontal (tel qu'un choc normalisé DANNER) provoquant un appui sur la cassette de refroidissement, l'ensemble est souvent cassé entraînant la détérioration de la cassette et du cadre.

Un but de l'invention est de fournir un tel ensemble améliorant les chances de préserver la cassette et/ou le cadre lorsque le véhicule subit un choc frontal.

En vue de la réalisation de ce but, on prévoit selon l'invention un ensemble pour véhicule, comprenant une cassette de refroidissement munie d'au moins un élément de cassette, et un cadre muni d'au moins un élément de cadre apte à coopérer avec l'élément de cassette pour fixer la cassette au cadre, dans lequel les éléments sont agencés de sorte qu'une poussée sur une face de la cassette destinée à être orientée vers l'avant du véhicule entraîne que l'élément de cassette se sépare de l'élément de cadre.

Ainsi dans de nombreuses circonstances, lorsque le choc produit une solicitation vers l'arrière sur la cassette, le choc entraîne la séparation de la cassette du cadre sans détérioration de l'un ou de l'autre. Il sera donc possible ou bien de remonter la cassette sur le cadre ou bien de remplacer seulement la cassette ou le cadre par une pièce identique.

L'ensemble selon l'invention pourra en outre présenter au moins l'une des caractéristiques suivantes :
- 11 comporte un plot en élastomère apte à être interposé entre l'élément de cassette et l'élément de cadre ;
- L'élément de cadre est apte à venir en contact avec l'élément de cassette pour fixer la cassette au cadre ;
- L'un parmi l'élément de cassette et l'élément de cadre est conformé comme une partie mâle et l'autre parmi l'élément de cassette et l'élément de cadre est conformé comme une partie femelle apte à recevoir la partie mâle ;
- L'élément de cassette est conformé comme une partie mâle ;
- L'un parmi l'élément de cassette et l'élément de cadre est conformé comme un ergot et l'autre parmi l'élément de cassette et l'élément de cadre est conformé de façon à retenir l'ergot par clipsage ;
- L'élément de cassette est conformé comme un ergot ;
- Il comporte une nervure s'étendant en saillie de la face de la cassette destinée à être orientée vers l'avant ;
- Il comporte un groupe motoventilateur fixé à la cassette, la cassette comportant un relief s'étendant en saillie de la face de la cassette destinée à être orientée vers l'avant et en saillie du groupe motoventilateur, vers l'avant.

On prévoit également selon l'invention un véhicule comprenant une cassette de refroidissement munie au moins d'un élément de cassette, et un cadre muni au moins d'un élément de cadre coopérant avec l'élément de cassette pour fixer la cassette au cadre, dans lequel les éléments sont agencés de sorte qu'une poussée sur une face de la cassette orientée vers l'avant du véhicule entraîne que l'élément de cassette se sépare de l'élément de cadre.

D'autres caractéristiques et avantages de l'invention apparaîtront encore dans la description suivante d'un mode préféré de réalisation donné à titre d'exemple non limitatif. Aux dessins annexés :
- La figure 1 est une vue en perspective éclatée d'un ensemble selon un mode préféré de réalisation de l'invention sans le groupe motoventilateur ;
- La figure 2 est une vue en coupe transversale du cadre et de la cassette de l'ensemble de la figure 1 au niveau d'une paire d'éléments de fixation; et
- La figure 3 est une vue en coupe horizontale de l'ensemble de la figure 1 selon le plan III-III.

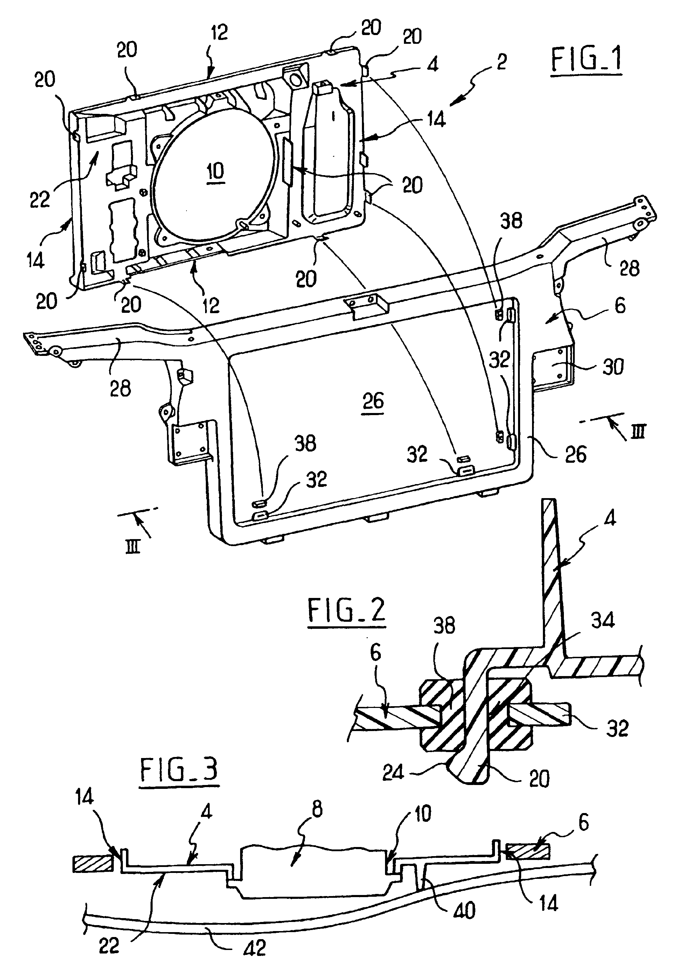

On a illustré aux figures 1 à 3 un ensemble selon un mode de préféré de réalisation de l'invention.

Cet ensemble 2 comprend une cassette de refroidissement 4, un cadre de support 6 et un groupe motoventilateur 8.

La cassette 4 a une forme générale rectangulaire de faible épaisseur. Elle comporte au voisinage de son centre une ouverture circulaire 10 destinée à recevoir le groupe motoventivaleur 8. La cassette 4 présente par ailleurs différents reliels et cavités destinés à la réception d'organes de types connus et qui ne seront pas décrits ici en détail. La cassette 4 est destinée à s'étendre dans un plan général vertical une fois fixée sur le véhicule. Dans cette position, les bords longitudinaux 12 du rectangle s'étendent horizontalement et suivant une direction transversale à la direction de marche du véhicule. Les petits côtés 14 du rectangle s'étendent suivant la direction verticale.

La cassette comporte des ergots 20, en l'espèce au nombre de 8, pour sa fixation au cadre 6. Chacun des quatre bords 12, 14 de la cassette porte deux des huit ergots. Les ergots s'entendent à partir du bord de la cassette vers l'avant en saillie de la face 22 de la cassette qui est destinée à être orientée vers l'avant du véhicule. Chaque ergot a une forme générale plate, essentiellement parallèle au bord qui le porte. Il présente également un bossage 24 d'un côté de l'ergot près de son extrémité libre pour la retenue de l'ergot dans un orifice de fixation qui sera décrit plus loin.

Le cadre 6 comporte un logement 26 de forme générale rectangulaire adapté à recevoir la cassette 4. Ce cadre comporte lui aussi deux côtés longitudinaux horizontaux et deux petits côtés verticaux. Les deux angles supérieurs gauche et droit du cadre sont prolongés latéralement par deux extensions 28. Les extensions 28 sont destinées à être fixées par leur extrémité aux doublures d'ailes du véhicule. De plus, le cadre 26 présente à mi hauteur de ses côtés verticaux des emplacements 30 pour la fixation du cadre à deux longerons du véhicule.

Le cadre comprend des pattes 32, en même nombre que les ergots 20, s'étendant à partir des quatre côtés du cadre en saillie dans l'ouverture destinée à recevoir la cassette. Chaque patte 32 a une forme générale plate verticale de contour rectangulaire. Elle présent en son centre un orifice 34. En l'espèce, cet orifice est occupé par un plot ou patin 38 en matériau élastomère présentant en son centre une ouverture et présentant sur son pourtour une gorge annulaire destinée à envelopper les bords de l'ouverture 34 de la patte pour la réception et le positionnement du patin dans cette ouverture. L'ouverture 34 de chaque patte 32 a une forme allongée de même que l'ouverture centrale du patin correspondant. Cette ouverture est apte à recevoir l'un des ergots 20. Les ergots 20 forment ainsi autant de parties mâles tandis que les pattes 32 forment les parties femelles destinées à les recevoir respectivement. Cette réception se fait par l'arrière. Par conséquent, on monte la cassette 4 sur le cadre 6 en l'introduisant dans l'ouverture 26 du cadre depuis l'arrière de celui-ci.

Lorsque la cassette est convenablement positionnée dans l'ouverture, les huit ergots 20 ont pénétré dans les ouvertures des 8 patins et sont reçus dans les pattes respectives. Lors de l'insertion des ergots dans les patins 38, le bossage 24 de chaque ergot constitue un point dur à franchir avant la réception convenable de l'ergot dans la patte. Ce point dur limite les risques de retrait intempestif de l'ergot hors de la patte par recul de la cassette hors du cadre. Les ergots se trouvent retenus fermement dans les pattes grâce à la compression exercée sur les ergots par les patins en matériau élastomère. De plus, le bossage 24 des ergots offre une retenue supplémentaire. La cassette est donc convenablement fixée dans le cadre qui la supporte.

La cassette 4 porte le groupe motoventilateur 8 reçu dans son ouverture 10 comme illustré dans la figure 3. La cassette présente un relief 40, en l'espèce sous la forme d'une nervure verticale, s'étendant en saillie de la face 22 de la cassette destinée à être orientée vers l'avant du véhicule. Cette nervure s'étend en saillie vers l'avant au-delà du groupe motoventilateur 8. De la sorte, lorsque le véhicule subit un choc frontal par exemple à faible vitesse engendrant une déformation temporaire ou définitive de la poutre de pare choc 42, dans de nombreuses circonstances la poutre 42 viendra frapper la cassette à l'endroit de la nervure 40 avant de toucher le groupe motoventilaleur. Cet impact provoque un recul de la cassette par rapport au cadre, entraînant la sortie des ergots au dehors des pattes. Le choc produit donc un démontage local ou total de la cassette par rapport au cadre. Dans de nombreux cas, ni la cassette ni le cadre ne seront endommagés. En particulier, les éléments de fixation formés par les pattes et les ergots seront préservés de toute dégradation. Il sera donc possible soit de remonter directement la cassette sur le cadre, soit de remplacer l'un ou l'autre par une pièce neuve. Il s'en suit une diminution du coût de réparation.

De plus, l'ensemble selon l'invention facilite la standardisation de la fixation des cassettes de refroidissement sur les cadres.

Les patins 38 ont essentiellement pour fonction d'amortir les vibrations. Dans une variante de réalisation, on pourra se dispenser de ces patins et clipser directement les ergots dans les pattes, la retenue s'effectuant grâce au bossage 24 à l'extrémité des ergots venant en appui élastique contre un bord de l'orifice de chaque patte.

L'invention est particulièrement adaptée aux circonstances de choc appelées communément choc DANNER.

Bien entendu, on pourra apporter à l'invention de nombreuses modifications sans sortir du cadre de celle-ci.

## Revendications

1. Ensemble (2) pour véhicule, comprenant une cassette de refroidissement (4) munie d'au moins un élément de fixation de cassette (20) et un cadre (6) muni d'au moins un élément de fixation de cadre (32) aptes à coopérer avec l'élément de fixation de cassette pour fixer la cassette au cadre, **caractérisé en ce que** les élément de fixation (20, 32) sont agencés de sorte qu'une poussée sur une face (22) de la cassette destinée à être orientée vers l'avant du véhicule entraîne que l'élément de fixation de cassette se sépare de l'élément de fixation de cadre.

2. Ensemble selon la revendication 1, **caractérisé en ce qu'**il comporte un plot (38) en élastomère apte à être interposé entre l'élément de fixation de cassette (20) et l'élément de fixation de cadre (32).

3. Ensemble selon la revendication 1, **caractérisé en ce que** l'élément de cassette (20) est apte à venir en contact avec l'élément de fixation de cadre (32) pour fixer la cassette au cadre.

4. Ensemble selon l'une quelconque des revendications 1 à 3, **caractérisé en ce que** l'un parmi l'élément de fixation de cassette et l'élément de fixation de cadre est conformé comme une partie mâle (20) et l'autre parmi l'élément de fixation de cassette et l'élément de fixation de cadre est conformé comme une partie femelle (32) apte à recevoir la partie mâle.

5. Ensemble selon la revendication 4, **caractérisé en ce que** l'élément de fixation de cassette (20) est conformé comme une partie mâle.

6. Ensemble selon l'une quelconque des revendications 1 à 5, **caractérisé en ce que** l'un (20) parmi l'élément de fixation de cassette et l'élément de fixation de cadre est conformé comme un ergot, et l'autre (32) parmi l'élément de fixation de cassette et l'élément de fixation de cadre est conformé de façon à retenir l'ergot par clipsage.

7. Ensemble selon la revendication 6, **caractérisé en ce que** l'élément de fixation de cassette (20) est conformé comme un ergot.

8. Ensemble selon l'une quelconque des revendications 1 à 7, **caractérisé en ce qu'**il comporte une nervure (40) s'étendant en saillie de la face (22) de la cassette destinée à être orientée vers l'avant.

9. Ensemble selon l'une quelconque des revendications 1 à 8, **caractérisé en ce qu'**il comporte un groupe motoventilateur (8) fixé à la cassette (4), la cassette comportant un relief (40) s'étendant en saillie de la face (22) de la cassette destinée à être orientée vers l'avant et en saillie du groupe motoventitateur (8) vers l'avant.

10. Véhicule comprenant une cassette de refroidissement (4) munie d'au moins un élément de fixation de cassette (20) et un cadre (6) muni d'au moins d'un élément de fixation de cadre (32) coopérant avec l'élément de fixation de cassette pour fixer la cassette au cadre, **caractérisé en ce que** les éléments de fixation (20, 32) sont agencés de sorte qu'une poussée sur une face (22) de la cassette orientée vers l'avant du véhicule entraîne que l'élément de fixation de cassette (20) se sépare de l'élément de fixation de cadre (32).

## Claims

1. Vehicle subassembly (2) including a cooling cassette (4) provided with at least one cassette-fixing element (20) and a frame (6) provided with at least one frame-fixing element (32) adapted to cooperate with the cassette-fixing element to fix the cassette to the frame, **characterized in that** the fixing elements (20, 32) are arranged so that a thrust force applied to a face (22) of the cassette that faces towards the front when mounted in the vehicle causes the cassette-fixing element to separate from the frame-fixing element.

2. Subassembly according to Claim 1, **characterized in that** it includes an elastomer stud (38) adapted to be interposed between the cassette-fixing element (20) and the frame-fixing element (32).

3. Subassembly according to Claim 1, **characterized in that** the cassette element (20) is adapted to come into contact with the frame-fixing element (32) to fix the cassette to the frame.

4. Subassembly according to any of Claims 1 to 3, **characterized in that** one of the cassette-fixing element and the frame-fixing element is conformed as a male part (20) and the other element is conformed as a female part (32) adapted to receive the male part.

5. Subassembly according to Claim 4, **characterized in that** the cassette-fixing element (20) is conformed as a male part.

6. Subassembly according to any of Claims 1 to 5, **characterized in that** one element (20) of the two elements of the cassette-fixing element and the frame-fixing element is conformed as a lug and the other element (32) is conformed to retain the lug with a clipping action.

7. Subassembly according to Claim 6, **characterized in that** the cassette-fixing element (20) is conformed as a lug.

8. Subassembly according to any of Claims 1 to 7, **characterized in that** it includes a rib (40) projecting from the face (22) of the cassette that faces towards the front when mounted in the vehicle.

9. Subassembly according to any of Claims 1 to 8, **characterized in that** it includes a motorized fan unit (8) fixed to the cassette (4), the cassette having a raised portion (40) projecting from the face (22) of the cassette that faces towards the front when mounted in the vehicle and projecting farther towards the front than the motorized fan unit (8).

10. Vehicle including a cooling cassette (4) provided with at least one cassette-fixing element (20) and a frame (6) provided with at least one frame-fixing element (32) cooperating with the cassette-fixing element to fix the cassette-fixing to the frame, **characterized in that** the fixing elements (20, 32) are arranged so that a thrust force applied to a face (22) of the cassette-fixing that faces towards the front when mounted in the vehicle causes the cassette-fixing element (20) to separate from the frame-fixing element (32).

## Patentansprüche

1. Baugruppe (2) für ein Fahrzeug, die folgendes umfaßt: eine Kühlungskassette (4), die mit wenigstens einem Kassetten-Befestigungselement (20) ausgestattet ist, und einen Rahmen (6), der mit wenigstens einem Rahmen-Befestigungselement (32) ausgestattet ist, das dafür eingerichtet ist, mit dem Kassetten-Befestigungselement zusammenzuwirken, um die Kassette am Rahmen zu befestigen, **dadurch gekennzeichnet, daß** die Befestigungselemente (20, 32) so ausgestaltet sind, daß ein Stoß auf eine Seite (22) der Kassette, die bestimmungsgemäß im Fahrzeug nach vorne gerichtet ist, bewirkt, daß das Kassetten-Befestigungselement sich vom Rahmen-Befestigungselement löst.

2. Baugruppe nach Anspruch 1, **dadurch gekennzeichnet, daß** sie ein Kontaktstück (38) aus einem Elastomer umfaßt, das dafür eingerichtet ist, zwischen das Kassetten-Befestigungselement (20) und das Rahmen-Befestigungselement (32) geschaltet zu werden.

3. Baugruppe nach Anspruch 1, **dadurch gekennzeichnet, daß** das Kassettenelement (20) dafür eingerichtet ist, mit dem Rahmen-Befestigungselement (32) in Kontakt zu kommen, um die Kassette am Rahmen zu befestigen.

4. Baugruppe nach einem der Ansprüche 1 bis 3, **dadurch gekennzeichnet, daß** von dem Kassetten-Befestigungselement und dem Rahmen-Befestigungselement das eine wie ein männlicher Teil (20) ausgebildet ist und das andere von dem Kassetten-Befestigungselement und dem Rahmen-Befestigungselement wie ein weiblicher Teil (32) ausgebildet ist, der dafür eingerichtet ist, den männlichen Teil aufzunehmen.

5. Baugruppe nach Anspruch 4, **dadurch gekennzeichnet, daß** das Kassetten-Befestigungselement (20) wie ein männlicher Teil ausgebildet ist.

6. Baugruppe nach einem der Ansprüche 1 bis 5, **dadurch gekennzeichnet, daß** das eine (20) von dem Kassetten-Befestigungselement und dem Rahmen-Befestigungselement wie eine Nase ausgebildet ist und das andere (32) von dem Kassetten-Befestigungselement und dem Rahmen-Befestigungselement so ausgebildet ist, daß es die Nase durch Clipwirkung festhält.

7. Baugruppe nach Anspruch 6, **dadurch gekennzeichnet, daß** das Kassetten-Befestigungselement (20) wie eine Nase ausgebildet ist.

8. Baugruppe nach einem der Ansprüche 1 bis 7, **dadurch gekennzeichnet, daß** sie eine Rippe (40) umfaßt, die sich von der Seite (22) der Kassette, die bestimmungsgemäß nach vorne gerichtet ist, hervorstehend erstreckt.

9. Baugruppe nach einem der Ansprüche 1 bis 8, **dadurch gekennzeichnet, daß** sie eine Motorgebläsegruppe (8) umfaßt, die an der Kassette (4) befestigt ist, wobei die Kassette ein Profil (40) umfaßt, das sich von der Seite (22) der Kassette, die bestimmungsgemäß nach vorne gerichtet ist, hervorstehend und in Bezug auf die Motorgebläsegruppe (8) nach vorne hervorstehend erstreckt.

10. Fahrzeug, das eine Kühlungskassette (4) umfaßt, die mit wenigstens einem Kassetten-Befestigungselement (20) ausgestattet ist, und einen Rahmen (6), der mit wenigstens einem Rahmen-Befestigungselement (32) ausgestattet ist, das mit dem Kassetten-Befestigungselement zusammenwirkt, um die Kassette am Rahmen zu befestigen, **dadurch gekennzeichnet, daß** die Befestigungselemente (20, 32) so ausgestaltet sind, daß ein Stoß auf eine Seite (22) der Kassette, die im Fahrzeug nach vorne gerichtet ist, bewirkt, daß das Kassetten-Befestigungselement (20) sich vom Rahmen-Befestigungselement (32) löst.
